# DEMANDE DE BREVET EUROPEEN

(11) **EP 2 060 163 A1**
(43) Date de publication de la demande: **20.05.2009**
(21) Numéro de dépôt: 08168998.6
(22) Date de dépôt: 13.11.2008
(51) Int. Cl.: A01B 49/06, A01C 7/06

(54) **Semoir permettant la distribution simultanée de graines et d'éléments granulaires, notamment d'engrais.**

(30) Priorité: 16.11.2007 FR 0708053
(71) Demandeur: Sulky Burel, 35220 Chateaubourg (FR)
(72) Inventeur: Clochard, Daniel, 35113, Domagne (FR); Leveille, Lionel, 35220, Saint Didier (FR)
(74) Mandataire: Branger, Jean-Yves

(57) **Abrégé**

Ce semoir comprend un châssis allongé (1) qui est pourvu à l'arrière d'un essieu (200) à roues relevables et à l'avant de moyens (10) d'attelage à un tracteur agricole, un ensemble d'organes semeurs (600) et/ou d'outils de travail du sol étant montés sous ce châssis (1), tandis qu'une trémie principale (3) destinée au stockage de graines, supportée par ce châssis (1), est située au-dessus des organes semeurs (600) et/ou des outils de travail du sol, des moyens d'alimentation pneumatiques (5 ; 50 ; 60 ; 6 ; 61) assurant le transfert des graines de la trémie principale (3) aux organes semeurs (600) ; ce semoir combiné est remarquable en ce qu'il comporte une trémie auxiliaire (4), destinée au stockage des éléments granulaires, également supportée par le châssis (1), et située approximativement à l'aplomb de l'essieu (200), des moyens d'alimentation pneumatiques (5 ; 51 ; 7 ; 71) assurant le transfert des éléments granulaires de la trémie auxiliaire (4) à des organes de distribution (700).

Grâce au positionnement de la trémie auxiliaire (4) au dessus des roues (2), le châssis (1) n'est pas anormalement sollicité mécaniquement, notamment en flexion, lors du déplacement du semoir.

Matériel agricole

## Description

La présente invention concerne un semoir permettant la distribution simultanée de graines et d'éléments granulaires, notamment d'engrais.

Des machines de ce type sont bien connues, par exemple par les documents de brevet FR-A- 1 595 598, DE-A- 39 06 971et WO 98/42177. Elles comportent au moins deux trémies séparées, ou une trémie cloisonnée dont les compartiments reçoivent des produits de nature différente ; selon les cas, les graines et les autres produits granulaires sont mélangés avant d'être distribués ensemble ou, au contraire, sont délivrés individuellement, via des organes de distribution distincts.

L'invention se rapporte plus particulièrement à un semoir de ce genre, dans lequel les graines de semence et les éléments granulaires, fertilisants par exemple, sont tous deux distribués par voie pneumatique, de manière indépendante (c'est-à-dire sans avoir été préalablement mélangés).

La plupart des fabricants de machines agricoles, et c'est le cas de la demanderesse, fabriquent et commercialisent à la fois des semoirs et des distributeurs d'engrais.

Chacune de ces deux catégories de machines comporte une trémie et un système de distribution spécifique, dont la forme, les matériaux utilisés et le mode de fonctionnement sont bien adaptés aux contraintes propres au produit en question.

Ainsi, s'agissant de l'enfouissement de graines de semence, leur dosage doit être particulièrement précis.

Pour ce qui est de la distribution d'engrais, la précision du dosage est souvent moins cruciale, mais il se pose un problème de résistance à la corrosion des parois de la trémie et de risque de colmatage du système de distribution, car l'engrais est sensible à l'hygrométrie et devient collant sous l'effet de l'humidité.

Il apparaît donc intéressant, à la fois sur le plan de la qualité du matériel et de l'abaissement des prix de revient, qu'un fabricant de semoirs et d'épandeurs d'engrais puisse fournir une machine combinée du genre indiqué plus haut (semoir permettant la distribution simultanée de graines et d'éléments granulaires, notamment d'engrais) qui soit équipée d'un certain nombre de composants, et notamment de trémies, identiques ou similaires à ceux déjà mis en oeuvre, et éprouvés, individuellement sur des semoirs et sur des épandeurs d'engrais.

C'est pourquoi un objectif de l'invention est de proposer une machine combinée de ce genre, qui a pour base un semoir de type connu, à distribution pneumatique des graines, et qui est équipée d'une trémie additionnelle permettant de stocker d'autres éléments granulaires, notamment de l'engrais, ainsi que de les distribuer correctement, également par la voie pneumatique, ceci sans que l'adjonction de ces matériels auxiliaires ne modifie pratiquement la structure du semoir d'origine, notamment sa robustesse, ni n'en affecte le fonctionnement.

D'autres objectifs de l'invention sont de proposer une machine combinée fiable, facile à utiliser, et d'un coût raisonnable.

La machine qui fait l'objet de l'invention comprend un châssis allongé qui est pourvu, à l'arrière, d'un essieu à roues relevables et, à l'avant, de moyens d'attelage à un tracteur agricole, un ensemble d'organes semeurs et/ou d'outils de travail du sol étant montés sous ce châssis, tandis qu'une première trémie dite principale, destinée au stockage de graines, est supportée par ledit châssis et est située sensiblement au-dessus des organes semeurs et/ou desdits outils de travail du sol, des moyens d'alimentation pneumatiques assurant le transfert des graines contenues dans la trémie principale aux organes semeurs.

Conformément à l'invention, cette machine comporte une seconde trémie, dite auxiliaire, destinée au stockage d'éléments granulaires, notamment d'engrais, celle-ci étant supportée par le châssis, et située dans la zone arrière de celui-ci, sensiblement à l'aplomb dudit essieu, des moyens d'alimentation pneumatiques assurant le transfert des éléments granulaires contenus dans la trémie auxiliaire vers des organes de distribution associés aux organes semeurs et/ou aux outils de travail du sol. De plus, les moyens d'alimentation pneumatiques qui assurent, d'une part, le transfert des graines contenues dans la trémie principale aux organes semeurs, d'autre part le transfert des éléments granulaires contenus dans la trémie auxiliaire vers des organes de distribution associés aux organes semeurs et/ou aux outils de travail du sol, comprennent tous deux une tête de répartition, chacune de ces têtes alimentant, via un ensemble distinct de tubulures souples et flexibles, respectivement, d'une part les organes semeurs, et d'autre part les organes de distribution.

Grâce au positionnement de la trémie auxiliaire au dessus des roues le châssis n'est pas anormalement sollicité mécaniquement, notamment en flexion, lors du déplacement du semoir.

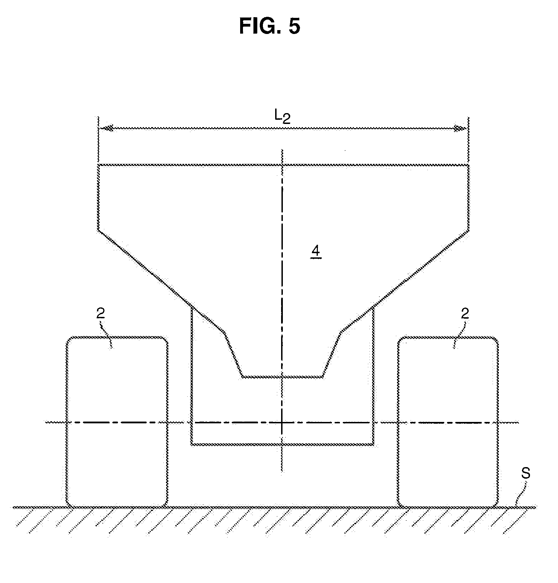

Il convient de mentionner que le semoir décrit dans le document WO 98/42177 cité plus haut -considéré comme le plus proche de l'invention - possède, en son mode de réalisation de la figure 5, une petite trémie 50 qui est disposée approximativement au-dessus des outils de travail du sol, tandis qu'une grande trémie 51 est située au-dessus de l'essieu des roues arrière.

Sur un tel semoir, c'est un mélange de produits granulaires contenus dans ces trémies qui alimente les organes semeurs, seule la grande trémie 51 étant équipée d'une tête de distribution reliée à ces organes semeurs par des conduits flexibles 53.

La petite trémie 50 ne possède pas de tête distributrice propre et, en conséquence, ne saurait fonctionner seule.

Au contraire, selon l'invention, chacune des deux trémies possède ses propres moyens de distribution et peut fonctionner de manière autonome, indépendamment de l'autre trémie.

Selon d'autres caractéristiques avantageuses, et non limitatives, de l'invention :
- les moyens d'alimentation pneumatiques assurant le transfert des graines contenues dans la trémie principale aux organes semeurs comprennent une tête de répartition disposée en partie haute de la trémie principale et reliée aux différents organes semeurs par des conduits flexibles ;
- les moyens d'alimentation pneumatiques assurant le transfert des éléments granulaires contenus dans la trémie auxiliaire vers des organes de distribution associés aux organes semeurs et/ou aux outils de travail du sol comprennent une tête de répartition disposée en partie haute de la trémie auxiliaire et reliée aux différents organes de distribution par des conduits flexibles ;
- lesdites têtes de répartition sont approvisionnées par un flux d'air comprimé véhiculant respectivement des graines et des éléments granulaires, et provenant d'une source d'air comprimé commune, telle qu'un ventilateur ;
- lesdits moyens de transfert pneumatique comprennent une trappe disposée en sortie de la trémie auxiliaire, par laquelle peuvent s'écouler par gravité les éléments granulaires qui y sont contenus, afin d'être incorporés dans un flux d'air comprimé approvisionnant la tête de répartition ;
- lesdits organes semeurs sont des rasettes associées à des disques de travail du sol, aptes à y creuser un sillon dans lequel les graines sont déposées ;
- lesdits organes de distribution sont associés aux organes semeurs et consistent en des tubulures aptes à assurer l'échappement et le dépôt des éléments granulaires derrière les organes semeurs ;
- lesdits organes de distribution sont ajustables en hauteur, en inclinaison, et/ou orientables latéralement par rapport aux organes semeurs ;
- le semoir comporte des rouleaux compacteurs disposés derrière lesdits organes semeurs et lesdits organes de distribution ;
- lesdits éléments semeurs et/ou lesdits outils de travail du sol sont portés par au moins deux éléments de support qui, en position de travail, s'étendent horizontalement et latéralement de chaque côté dudit châssis et qui sont articulés à celui-ci de sorte qu'ils peuvent être relevés verticalement en position de travail, sur les côtés de la trémie principale ;
- la trémie auxiliaire a une largeur sensiblement plus grande que celle de la trémie principale ; avantageusement, elle est adaptée pour pouvoir être approvisionnée par l'arrière.

Selon un mode de réalisation du semoir de l'invention, celui-ci comprend un châssis allongé qui est pourvu à l'arrière d'un essieu à roues relevables et à l'avant de moyens d'attelage à un tracteur agricole, un ensemble d'outils de travail du sol étant montés sous ce châssis, tandis qu'une première trémie, dite principale, destinée au stockage de graines, est supportée par ledit châssis et est située sensiblement au-dessus desdits outils de travail du sol, des moyens d'alimentation pneumatiques assurant le transfert des graines contenues dans la trémie principale à des organes semeurs disposés derrière le châssis, ce semoir étant caractérisé par le fait qu'il comporte une seconde trémie, dite auxiliaire, destinée au stockage d'éléments granulaires, notamment d'engrais, celle-ci étant supportée par le châssis et située dans la zone arrière de celui-ci, approximativement à l'aplomb dudit essieu, des moyens d'alimentation pneumatiques assurant le transfert des éléments granulaires contenus dans la trémie auxiliaire vers des organes de distribution disposés à l'arrière desdits outils de travail du sol.

Dans ce mode de réalisation, les moyens d'alimentation pneumatiques assurant le transfert des graines contenues dans la trémie principale aux organes semeurs comprennent avantageusement une tête de répartition qui est également fixée à l'arrière du châssis et reliée aux différents organes semeurs par des conduits flexibles.

D'autres caractéristiques et avantages de l'invention apparaîtront à la lecture de la description suivante d'un mode de réalisation préféré de l'invention.

Cette description est faite en référence aux dessins annexés dans lesquels :
- la figure 1 est une vue de côté schématique d'un semoir conforme à l'invention ;
- les figures 2 et 3 sont des vues de détail, respectivement de côté et de dessus, des organes semeurs et des organes de distribution ;
- la figure 4 est un schéma vu de face de la trémie principale, destiné à montrer le relevage des outils semeurs en position de transport ;
- la figure 5 est un schéma similaire représentant la trémie auxiliaire.
- la figure 6 est une vue similaire à la figure 1 qui représente un second mode de réalisation du semoir.

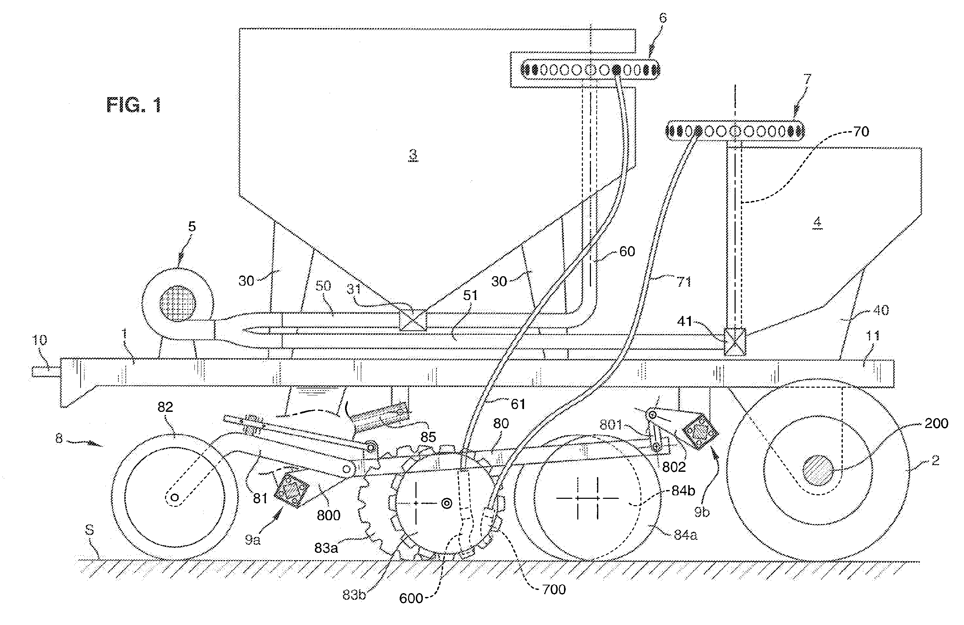

La machine agricole illustrée sur la figure 1 est un semoir permettant de distribuer sur un sol S simultanément des graines de semence et des éléments granulaires ou pulvérulents. Ces éléments peuvent être notamment des particules de produit fertilisant (engrais) et/ou de traitement phytosanitaire, voire une autre espèce de graines, dans l'hypothèse où l'on souhaite pratiquer sur un même terrain des cultures différentes.

Cette machine comporte un châssis allongé rigide 1, sensiblement horizontal.

Du côté avant de la machine, situé sur la gauche de la figure 1, l'extrémité de ce châssis est pourvue d'un organe d'accrochage 10 permettant de l'atteler à un tracteur (non représenté). Sa portion d'extrémité arrière 11 est supportée par une paire de roues 2 montées folles sur un essieu 200.

En principe, les roues 2 ne sont en contact avec le sol S qu'en position de transport. De façon bien connue, elles sont articulées par rapport au châssis, de manière à pouvoir être relevées et escamotées (par actionnement d'un ou de plusieurs vérins hydrauliques) pour la position de travail. Le semoir est alors en appui sur le sol par l'intermédiaire des éléments semeurs tels qu'ils seront décrits plus loin. Le système d'escamotage des roues, connu en soi, n'est pas exposé ici afin de ne pas alourdir inutilement la présente description ni les figures.

Le semoir est équipé de deux trémies 3 et 4 fixées sur le châssis 1 par l'intermédiaire de jambages 30 et/ou d'organes de support 40 appropriés.

La trémie 3, conventionnellement appelée « principale » est positionnée dans la partie médiane du châssis 1. Elle est destinée à contenir les graines.

La trémie 4, conventionnellement appelée « auxiliaire » est plus petite que la trémie 3. Elle est située à l'arrière du châssis 1, sensiblement à l'aplomb de l'essieu 200. Elle est destinée à contenir les éléments granulaires : engrais ou autres.

A l'avant du châssis 1 est monté un générateur d'air comprimé 5, tel qu'un ventilateur ou une turbine par exemple, entraîné par des moyens appropriés non représentés, par exemple à partir d'une source de courant électrique provenant du tracteur.

Le générateur 5 fournit un courant d'air comprimé vers deux têtes de répartition et de distribution distinctes 6, 7 montées en partie supérieure des trémies 3, respectivement 4.

Comme on le verra plus loin, ces têtes alimentent, via deux ensembles de tubulures (conduites de transfert) souples et flexibles 61, respectivement 71, d'une part les organes semeurs, et d'autre part les organes distributeurs de produit granulaire.

Ces deux ensembles sont distincts, indépendants l'un de l'autre.

Traditionnellement, la tête de répartition et de distribution d'un semoir pneumatique comprend un boîtier creux et relativement plat, de forme circulaire, d'axe vertical qui est pourvu à sa périphérie d'une pluralité d'embouts radiaux sur lesquels sont connectées les tubulures souples alimentant les organes semeurs.

Ce boîtier est fixé à l'extrémité supérieure d'un conduit vertical, ou colonne, dans lequel arrive de bas en haut un flux d'air véhiculant les graines.

En général les graines sont prélevées en fond de trémie et distribuées de manière précise par une roue doseuse rotative, puis aspirées par effet de Venturi, et incorporées dans le courant d'air qui circule dans le conduit reliant le ventilateur à la base de la colonne.

Un dispositif de ce genre est décrit par exemple dans le document DE-U- 87 08 456.

La trémie est traditionnellement recouverte d'un élément de fermeture et de protection, tel qu'un couvercle ou une bâche.

Selon les agencements, la tête de répartition est installée à l'intérieur de la trémie, sous cet élément par conséquent, ou au contraire à l'extérieur, au-dessus de l'élément. Dans un ne troisième solution, qui fait l'objet du document EP-A- 1 488 674, la tête de répartition est logée dans un compartiment constitué par un renfoncement de paroi de la trémie.

Dans le mode de réalisation illustré sur la figure 1, c'est un montage de ce genre qui est prévu pour la tête de répartition 6 associée à la trémie 3, tandis que la tête de répartition 7 associée à la trémie 4 est disposée au-dessus de cette dernière.

Des montages différents sont naturellement possibles, sans pour cela sortir du cadre de la présente invention.

En dessous du niveau du châssis 1, et solidaire de celui-ci, est installé un outillage de semis 8.

Dans le mode de réalisation illustré, qui reprend l'agencement faisant l'objet du document FR-A- 2 896 659, auquel on pourra se reporter au besoin, cet outillage comprend un certain nombre de bras porteurs parallèles 80, qui sont reliés chacun au châssis 1 par l'intermédiaire d'articulations élastiques 9a, 9b, respectivement à leur extrémité avant et à leur extrémité arrière.

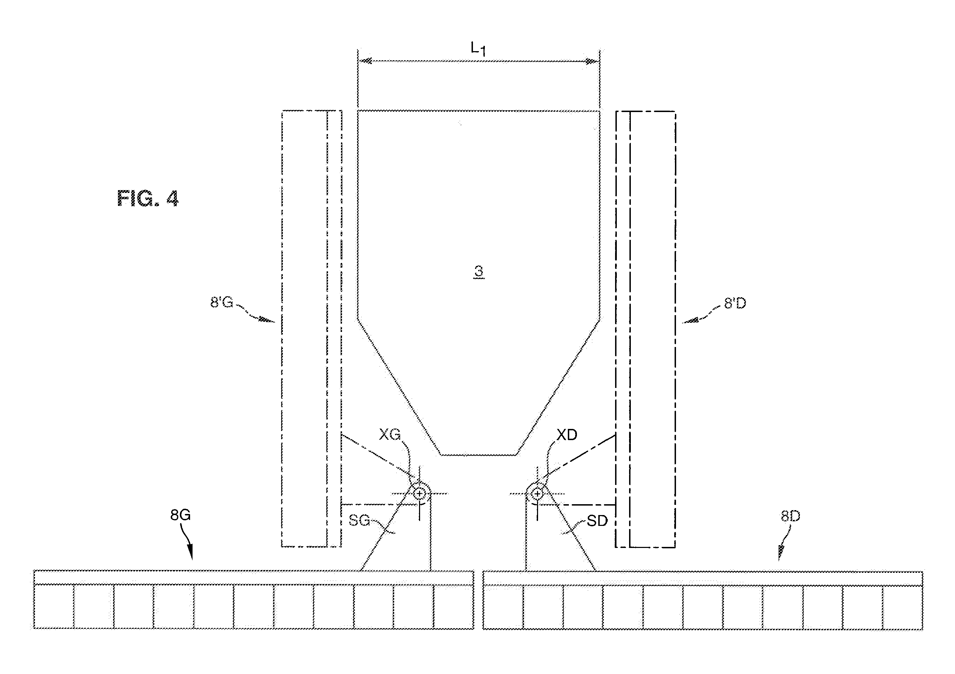

Comme on le voit sur la figure 4, cette série de bras déborde largement de chaque côté du semoir, et est subdivisée en deux séries symétriques portées chacune par un châssis intermédiaire 8G, 8D, qui est articulé au châssis 1 au moyen de supports SG, SD, articulés autour d'axes horizontaux longitudinaux XG, respectivement XD, ce qui permet de les faire pivoter vers le haut dans la position escamotée 8'G, 8'D illustrée en traits interrompus.

Ce pivotement peut être commandé par des vérins hydrauliques (non représentés).

Dans cet état escamoté, favorable au transport sur route, chaque série de bras occupe une position verticale, dans laquelle elle se trouve accolée à une face latérale de la trémie 3.

Chaque bras porteur 80 est relié à l'articulation élastique avant 9a par un levier 800, et à l'articulation élastique arrière 9b par un jeu de biellettes 801 - 802.

A l'avant, il est relié par un levier coudé 81 à une roue d'appui au sol 82, réglable en hauteur.

En partie médiane, le bras 80 supporte une paire de disques semeurs 83a, 83b munis chacun d'un coutre, ou rasette 600, apte à être alimentée en semence depuis la tête 6 via un conduit souple et flexible 61.

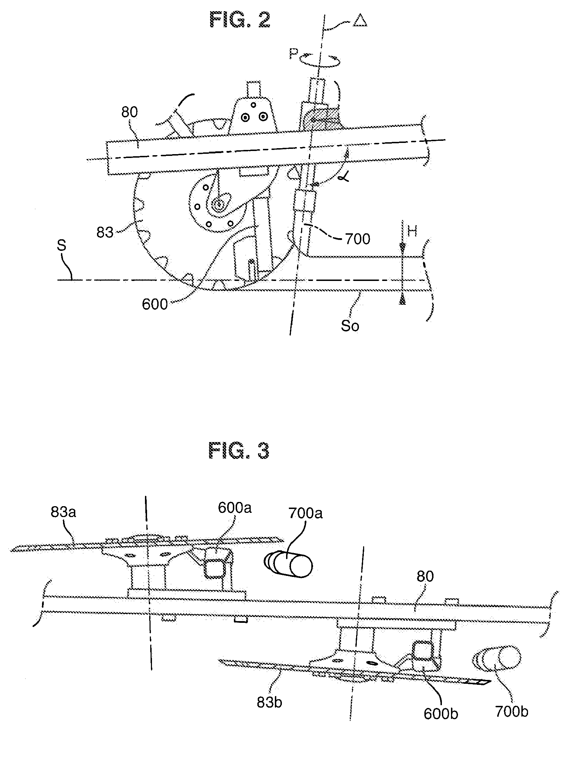

Traditionnellement, ces disques sont situés de chaque côté du bras porteur 80 avec un certain décalage longitudinal ; de plus ils sont légèrement inclinés par rapport à un plan vertical longitudinal, dans le sens d'une convergence vers l'avant ; leur axe de rotation, horizontal, forme un angle de l'ordre de 93° par rapport à un axe transversal (voir figure 3).

Chaque rasette 600 affleure la face interne du disque associé, dans sa zone basse, un peu en arrière de son plan vertical transversal médian.

Chaque bras 80, avec les disques 83a, 83b qu'il supporte, est repoussé fermement vers le bas par les articulations élastiques 9a, 9b, de sorte que le tranchant de chaque disque pénètre dans le sol S et y creuse un sillon, dans lequel les graines sortant de la rasette associée sont déposées en ligne, de manière régulière.

A l'arrière des disques semeurs est disposée une paire de rouleaux suiveurs 84a, 84b, également supportés par le bras 80, de chaque côté de celui-ci, adaptés pour rouler sur le sol et le compacter. Avantageusement, le montage de ces rouleaux suiveurs est conforme aux préconisations du document EP-B- 0 611 204, avec un montage en tandem, à double manivelle.

Une telle disposition, cependant, n'est nullement obligée.

Un vérin 85 (partiellement visible sur la figure 1) agissant sur l'axe de l'articulation élastique 9a, via un palonnier, permet de régler la profondeur de travail des disques semeurs et la pression d'appui.

Chaque bras 80 supporte également une paire d'organes de distribution 700. Ce sont des tubulures (manchons) dont la partie d'extrémité inférieure est ouverte vers le bas et vers l'arrière, comme une embouchure de pipe, et est positionnée juste derrière une rasette 600, à un niveau un peu plus haut que la sortie de cette dernière.

La figure 3 montre le positionnement de chacune des tubulures 700a et 700b, du côté de la face interne du disque 83a, respectivement 83b, à l'arrière de la rasette 600a, respectivement 600b, à laquelle elle est associée.

Chaque tubulure 700 est alimentée pneumatiquement en produit granulaire issu de la trémie auxiliaire 4 via la tête de répartition 7 et le conduit de transfert 71 auquel elle est connectée.

Le transfert des graines du fond de la trémie principale dans le conduit pneumatique 50 et dans la colonne 60 qui alimente la tête 6 peut se faire au moyen d'un dispositif de distribution classique 31, à roue doseuse.

Le transfert des éléments granulaires du fond de la trémie auxiliaire dans le conduit pneumatique 51 et la colonne 70 qui alimente la tête 7 peut se faire tout simplement par gravité, à travers une trappe de fond de goulotte 41 à ouverture réglable, du même type que celles classiquement utilisées pour permettre l'échappement de l'engrais hors de sa trémie sur un disque d'épandage par centrifugation.

Cette trappe peut avantageusement être équipée d'un doigt d'agitation favorisant le bon écoulement du produit et réduisant les risques de colmatage (voir par exemple le FR - A - 2 883 265).

Sur la figure 2, la référence S₀ désigne le fond du sillon tracé par un disque semeur 83 dans le sol S.

Avantageusement la tubulure 700 est montée sur le bras 80 de telle façon que sa position, et notamment celle de son orifice de sortie, par rapport au disque semeur, soit réglable.

Est de préférence réglable l'un au moins des paramètres suivants :
- son inclinaison α par rapport à la direction du bras 80 ;
- sa hauteur H par rapport à S₀ ;
- son orientation angulaire ρ autour de son propre axe Δ.

Ceci permet d'ajuster le point de chute des éléments granulaires, notamment des particules d'engrais ou de la seconde espèce de graine de semence, afin de le positionner au mieux par rapport aux graines déjà déposées par la rasette.

Cette liberté d'ajustements, discrets ou continus, peut être obtenue par des moyens de montage connus en soi.

Après semis, les rouleaux suiveurs assurent un compactage du sol qui a pour effet d'enfouir légèrement les graines et les éléments granulaires dans la terre, voire de refermer au moins partiellement les sillons.

La trémie auxiliaire 4 peut avoir une largeur L2 (voir figure 5) sensiblement plus grande que la largeur L1 de la trémie 3, car elle ne se trouve pas en regard d'organes latéraux relevables.

Cette trémie 4 peut être facilement remplie par accès à l'arrière, par exemple au moyen d'un godet équipant un chargeur agricole.

La situation de cette trémie à l'aplomb, ou presque, de l'essieu 200 fait que son poids ne sollicite pratiquement pas le châssis 1 mécaniquement, notamment à la flexion lorsque le semoir est en position de transport.

Les risques de déformation du châssis sont donc éliminés, et il est possible d'utiliser le même châssis que celui qui équipe un semoir simple.

Un tel semoir peut être proposé comme semoir simple, dès lors que la trémie 4 et les organes de distribution 7 - 70 - 71- 700 sont démontés, sous réserve, éventuellement, de modifications mineures.

De même une trémie identique à la trémie 4, dès lors que le système de distribution pneumatique 70 - 7 est démonté, ainsi que sa trappe de distribution 41, peuvent être utilisées, pour équiper un épandeur centrifuge classique.

On comprend aisément que cette possibilité est économiquement intéressante pour un industriel qui fabrique et commercialise à la fois des semoirs simples, des épandeurs d'engrais simples, et des semoirs combinés tels que celui de l'invention.

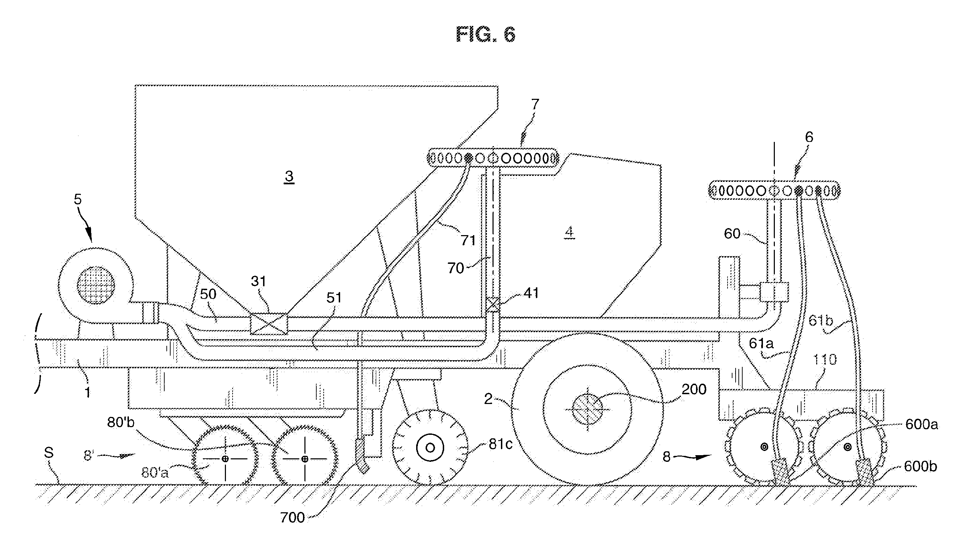

En référence à la figure 6 est décrit un second mode de réalisation d'un semoir conforme à l'invention.

Les organes similaires, ou ayant des fonctions similaires, à ceux du mode de réalisation de la figure 1 ont été affectés de signes de référence identiques.

Ce semoir se distingue essentiellement du précédent par le fait que sous la partie centrale du châssis sont montés non pas des organes semeurs, mais des organes de travail du sol 8'. Ceux-ci, de type connu en soi, comportent par exemple une série de disques 80'a, 80'b et de rouleaux 81c.

Les organes semeurs 8, qui peuvent être similaires à ceux du premier mode de réalisation, sont supportés par un bâti 110 qui prolonge le châssis 1 vers l'arrière.

La tête de répartition 6 des graines est également montée sur le châssis 110, et alimente les rasettes 600a, 600b associées aux disques semeurs via des conduits flexibles 61a, 61b.

Les tubulures de distribution d'engrais (ou d'autre produit granulaire) 700, quant à elles, sont associés aux outils de travail du sol ; sur l'exemple illustré elles sont situées derrière les disques 80'.

L'engrais est éjecté dans un flux de terre en mouvement.

Ce produit granulaire est donc distribué ici devant les graines de semence, de préférence entre deux rangs de semis à venir ; le nombre de socs semeurs 600 est double du nombre de tubulures 700.

Comme dans le premier mode de réalisation, la tête de répartition 7 qui alimente, via les conduits flexibles 71, ces tubulures 700 est disposée en partie haute de la trémie auxiliaire 4.

L'ensemble composé de la tête de répartition 6 et des conduites de transfert 61a-61b est distinct de l'ensemble composé de la tête de répartition 7 et des conduites de transfert 71.

Chacun de ces deux ensembles peut travailler de manière autonome.

De façon analogue à celle du premier mode de réalisation, les outils de travail du sol sont montés sur des supports latéraux articulés, de manière à pouvoir être relevés de chaque côté de la trémie 3 pour le transport sur route.

Un montage similaire peut être prévu pour les organes semeurs, dont le relevage se fait à l'arrière du châssis, derrière la trémie 4 (dont la largeur ne gêne donc pas).

Dans chacun des deux modes de réalisation décrits ci-dessus, la trémie principale 3 est supportée par la partie médiane du châssis 1, et la trémie auxiliaire 4 est placée dans la zone arrière de ce châssis, au droit, ou approximativement au droit, des roues 2.

On ne sortirait pas bien sûr du cadre de l'invention en mettant des engrais dans la trémie principale 3 et des graines dans la trémie annexe 4. Dans ce cas, la trémie 3 serait connectée par voie pneumatique aux tubulures 700 tandis qu'inversement la trémie 4 serait connectée par voie pneumatique aux socs semeurs 600a - 600b.

## Revendications

1. Semoir permettant la distribution simultanée de graines et d'éléments granulaires, notamment d'engrais, comprenant un châssis allongé (1) qui est pourvu, à l'arrière d'un essieu (200) à roues (2) relevables, et, à l'avant, de moyens (10) d'attelage à un tracteur agricole, un ensemble d'organes semeurs (600) et/ou d'outils de travail du sol (8') étant montés sous ce châssis (1), tandis qu'une première trémie (3) dite principale, destinée au stockage de graines, est supportée par ledit châssis (1) et est située sensiblement au-dessus desdits organes semeurs (600) et/ou des outils de travail du sol (8'), des moyens d'alimentation pneumatiques (5 ; 50 ; 60 ; 6 ; 61) assurant le transfert des graines contenues dans la trémie principale (3) aux organes semeurs (600), **caractérisé par le fait qu'**il comporte une seconde trémie (4), dite auxiliaire, destinée au stockage d'éléments granulaires, notamment d'engrais, celle-ci étant supportée par le châssis (1), et située dans la zone arrière de celui-ci, sensiblement à l'aplomb dudit essieu (200), des moyens d'alimentation pneumatiques (5 ; 51 ; 7 ; 71) assurant le transfert des éléments granulaires contenus dans la trémie auxiliaire (4) vers des organes de distribution (700) associés aux organes semeurs (600) et/ou aux outils de travail du sol (8') et que les moyens d'alimentation pneumatiques qui assurent, d'une part, le transfert des graines contenues dans la trémie principale (3) aux organes semeurs (600), d'autre part le transfert des éléments granulaires contenus dans la trémie auxiliaire (4) vers des organes de distribution (700) associés aux organes semeurs (600) et/ou aux outils de travail du sol (8'), comprennent tous deux une tête de répartition (6 ; 7), chacune de ces têtes alimentant, via un ensemble distinct de tubulures souples et flexibles (61), respectivement (71), d'une part les organes semeurs (600), et d'autre part les organes de distribution (700).

2. Semoir selon la revendication 1, **caractérisé par le fait que** la tête de répartition (6) qui alimente les organes semeurs (600) est disposée en partie haute de la trémie principale (3) ou à l'arrière du châssis (1).

3. Semoir selon la revendication 1 ou la revendication 2, **caractérisé par le fait que** la tête de répartition (7) qui alimente les organes de distribution (700) est disposée en partie haute de la trémie auxiliaire (4).

4. Semoir selon l'une quelconque des revendications 1 à 3, **caractérisé par le fait que** lesdites têtes de répartition (6, 7) sont approvisionnées par un flux d'air comprimé véhiculant respectivement des graines et des éléments granulaires, et provenant d'une source d'air comprimé commune, telle qu'un ventilateur (5).

5. Semoir selon la revendication 1 à 4, **caractérisé par le fait que** lesdits moyens de transfert pneumatique comprennent une trappe (41) disposée en sortie de la trémie auxiliaire (4), par laquelle peuvent s'écouler par gravité les éléments granulaires qui y sont contenus, afin d'être incorporés dans un flux d'air comprimé approvisionnant la tête de répartition (7) qui alimente les organes de distribution (700).

6. Semoir selon l'une quelconque des revendications précédentes, **caractérisé par le fait que** lesdits organes semeurs (600) sont des rasettes associées à des disques (83) de travail du sol (S), aptes à y creuser un sillon dans lequel les graines sont déposées.

7. Semoir selon la revendication 4, **caractérisé par le fait que** lesdits organes de distribution (700) sont associés aux organes semeurs (600) et consistent en des tubulures aptes à assurer l'échappement et le dépôt des éléments granulaires derrière les organes semeurs.

8. Semoir selon la revendication 5, **caractérisé par le fait que** lesdits organes de distribution (700) sont ajustables en hauteur, en inclinaison, et/ou orientables latéralement par rapport aux organes semeurs (600).

9. Semoir selon l'une quelconque des revendications 4 à 6, **caractérisé par le fait qu'**il comporte des rouleaux compacteurs (84) disposés derrière lesdits organes semeurs (600) et lesdits organes de distribution (700).

10. Semoir selon l'une quelconque des revendications précédentes, **caractérisé par le fait que** lesdits éléments semeurs et/ou lesdits outils de travail du sol sont portés par au moins deux éléments de support (8G, 8D) qui, en position de travail, s'étendent horizontalement et latéralement de chaque côté dudit châssis et qui sont articulés à celui-ci de sorte qu'ils peuvent être relevés verticalement en position de transport, sur les côtés de la trémie principale (3).

11. Semoir selon la revendication 10, **caractérisé par le fait que** la trémie auxiliaire (4) a une largeur (L2) sensiblement plus grande que celle (L1) de la trémie principale (3).

12. Semoir selon l'une quelconque des revendications 1 à 5, **caractérisé par le fait qu'**il comporte un ensemble d'outils de travail du sol (8') montés sous le châssis (1), la trémie principale (3) étant située sensiblement au-dessus de ces outils de travail du sol (8'), tandis que les organes semeurs (600) sont disposés derrière le châssis (1), et que lesdits moyens d'alimentation pneumatiques (5 ; 51 ; 7 ; 71) assurent le transfert des éléments granulaires contenus dans la trémie auxiliaire (4) vers des organes de distribution (700) disposés à l'arrière desdits outils de travail du sol (8').

13. Semoir selon la revendication 12, **caractérisé par le fait que** la tête de répartition (6) assurant le transfert des graines contenues dans la trémie principale (3) aux organes semeurs (600) est fixée à l'arrière du châssis (1).
